(19) Europäisches Patentamt
European Patent Office
Office européen des brevets

(11) **EP 4 586 537 A1**

(12) **EUROPEAN PATENT APPLICATION**

(43) Date of publication:
**16.07.2025 Bulletin 2025/29**

(21) Application number: **25151128.3**

(22) Date of filing: **10.01.2025**

(51) International Patent Classification (IPC):
**H04L 5/00** (2006.01)   **H04W 24/10** (2009.01)

(52) Cooperative Patent Classification (CPC):
**H04L 5/0057; H04L 5/0078; H04L 5/0091;**
**H04W 24/10; H04L 5/0048**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.01.2024   KR 20240005604**
**23.12.2024   KR 20240193744**

(71) Applicant: **KT Corporation**
**Seongnam-si, Gyeonggi-do 13606 (KR)**

(72) Inventors:
• **LEE, Eun-Jong**
  **13606 Seongnam-si, Gyeonggi-do (KR)**
• **PARK, Kyujin**
  **13606 Seongnam-si, Gyeonggi-do (KR)**

(74) Representative: **BCKIP Part mbB**
**MK1**
**Landsbergerstraße 98, 3.Stock**
**80339 München (DE)**

(54) **METHOD AND APPARATUS FOR REPORTING EVENT-BASED MEASUREMENT RESULT**

(57)     Provided are a method and apparatus for reporting an event-based measurement result in a wireless communication system. The terminal receives i) channel state information (CSI) reporting configuration information including event information and ii) CSI resource configuration information from a base station. The terminal performs measurement for at least one of a channel state information-reference signal (CSI-RS) and a synchronization signal block (SSB) based on the CSI resource configuration information. The terminal transmits layer 1 (L1) signaling or layer 2 (L2) signaling for a CSI report to the base station, upon satisfaction of at least one event according to the event information included in the CSI reporting configuration information based on the measurement.

## FIG. 11

EP 4 586 537 A1

**Description**

CROSS-REFERENCE TO RELATED THE APPLICATION

This application is based on and claims priority to Patent Application No. 10-2024-0005604 filed on Jan. 12, 2024 and No. 10-2024-0193744 filed on Dec. 23, 2024 in the Korean Intellectual Property Office.

BACKGROUND

Technical Field

The present specification relates to wireless communication applicable to 5G NR, 5G-Advanced and 6G.

Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios which are classified into Enhanced Mobile Broad-Band (eMBB), Ultra-reliability and low-latency communication (URLLC), Massive Machine-Type Communications (mMTC), and the like.

eMBB, URLLC, and mMTC are represent next generation mobile communication scenarios. eMBB is characterized by high spectrum efficiency, high user experienced data rate, high peak data. URLLC is characterized by ultra-reliable, ultra-low latency, ultra-high availability (e.g., vehicle-to-everything (V2X), Emergency Service, Remote Control). mMTC is characterized by low cost, low energy, short packet, and massive connectivity (e.g., Internet of Things (IoT)).

SUMMARY

The disclosure is to provide a method and apparatus for a terminal (e.g., UE) to perform layer 1 (L1) measurement of serving/neighboring cells according to the configuration of a base station in a wireless communication system, and to report L1 measurement results through L1 control information or layer 2 (L2) control information based on events configured by the base station according to the measured L1 results.

According to an embodiment, there is provided a method of operating a terminal (e.g., UE) in a wireless communication system. The method may include receiving channel state information (CSI) reporting configuration information including event information and CSI resource configuration information, performing measurement on at least one of a channel state information-reference signal (CSI-RS) and a synchronization signal block (SSB) based on the CSI resource configuration information, and transmitting layer 1 (L1) signaling or layer 2 (L2) signaling for a CSI report, upon satisfaction of at least one event according to the event information included in the CSI reporting configuration information based on the measurement.

According to another embodiment, there is provided a method of operating a base station in a wireless communication system. The method may include transmitting CSI reporting configuration information including event information, and CSI resource configuration information for measurement of at least one of a CSI-RS and an SSB, and receiving layer 1 (L1) signaling or layer 2 (L2) signaling for a CSI report, upon satisfaction of at least one event according to the event information included in the CSI reporting configuration information based on the CSI resource configuration information for the measurement.

According to further another embodiment, there is provided a terminal (e.g., UE) in the wireless communication system, which includes at least one, and at least one memory configured to store instructions and be operably electrically connectable to the at least one processor. Operations performed based on the instructions executed by the at least one processor may include: receiving channel state information (CSI) reporting configuration information including event information and CSI resource configuration information from the base station; performing measurement on at least one of a CSI-RS and a SSB based on the CSI resource configuration information; and transmitting layer 1 (L1) signaling or layer 2 (L2) signaling for a CSI report to the base station, upon satisfaction of at least one event according to the event information included in the CSI reporting configuration information based on the measurement.

According to yet another embodiment, there is provided a base station in the wireless communication system. The base station includes at least one, and at least one memory configured to store instructions and be operably electrically connectable to the at least one processor. The operations performed based on the instructions executed by the at least one processor may include: transmitting CSI reporting configuration information including event information, and CSI resource configuration information for measurement of at least one of a CSI-RS and an SSB and receiving layer 1 (L1) signaling or layer 2 (L2) signaling for a CSI report, upon satisfaction of at least one event based on the event information included in the CSI reporting configuration information based on the CSI resource configuration information for the measurement.

Meanwhile, after transmitting the L1 signaling or the L2 signaling, the terminal may receive information that indicates activation of the CSI report, after transmitting the L1 signaling or the L2 signaling from the base station; and transmit the CSI report based on the information that indicates the activation of the received CSI report to the base station.

The L2 signaling may include a medium access control (MAC) control element (CE), and the MAC CE may include information about the at least one event. Here, the information about the at least one event may include at least one CSI reporting configuration identity (ID). In addition, the L1 signaling may be to request uplink resources for the MAC CE.

Further, the L1 signaling may include at least one of dedicated scheduling request (SR) physical uplink control channel (PUCCH) and a dedicated preamble.

BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIGS. 7A to 7C show examples of a CSI reporting procedure in NR.
FIG. 8 is a flowchart showing an operation method of a UE according to an embodiment of the present specification.
FIGS. 9A to 9F illustrate the CSI reporting scheduling request MAC CE formats proposed in the present specification.
FIG. 10 shows a procedure between a UE and a base station according to an embodiment of the present specification.
FIG. 11 shows a procedure between a UE and a base station according to another embodiment of the present specification.
FIG. 12 shows a procedure between a UE and a base station according to another embodiment of the present specification.
FIG. 13 shows a procedure between a UE and a base station according to another embodiment of the present specification.
FIG. 14 is a flowchart showing an operation method of a UE according to another embodiment of the present specification.
FIG. 15 is a flowchart showing an operation method of a base station according to another embodiment of the present specification.
FIG. 16 is a block diagram showing apparatuses according to an embodiment of the disclosure.
FIG. 17 is a block diagram showing a terminal according to an embodiment of the disclosure.
FIG. 18 is a block diagram of a processor in accordance with an embodiment.
FIG. 19 is a detailed block diagram of a transceiver of a first apparatus shown in FIG. 16 or a transceiving unit of an apparatus shown in FIG. 17.

DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

Abase station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on a long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto . For convenience of description, FR1 in the NR system may refer to a Sub-6 GHz range, and FR2 may refer to an above-6 GHz range, which may be commonly referred to as millimeter waves (mmWs).

[Table 1]

| Frequency Range designation | Corresponding frequency range | Subcarrier Spacing |
| --- | --- | --- |
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs that do not include information from a higher layer. For example, UL physical channels include physical uplink shared channel (PUSCH), physical uplink control channel (PUCCH), and physical random access channel (PRACH). UL physical signals include a demodulation reference signal (DMRS) for a LTL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying LTL control information (UCI)/UL data/a random access signal.

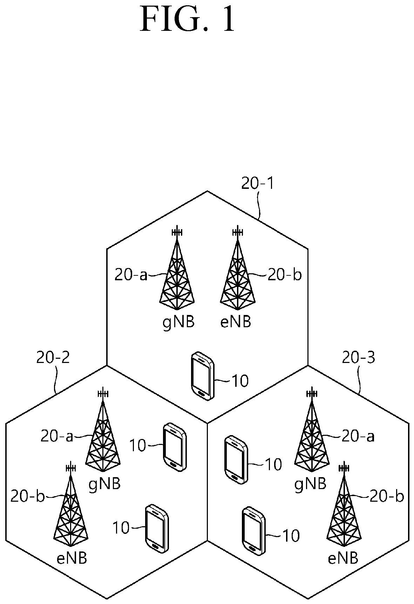

FIG. 1 is a diagram illustrating a wireless communication system.

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. Abase station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

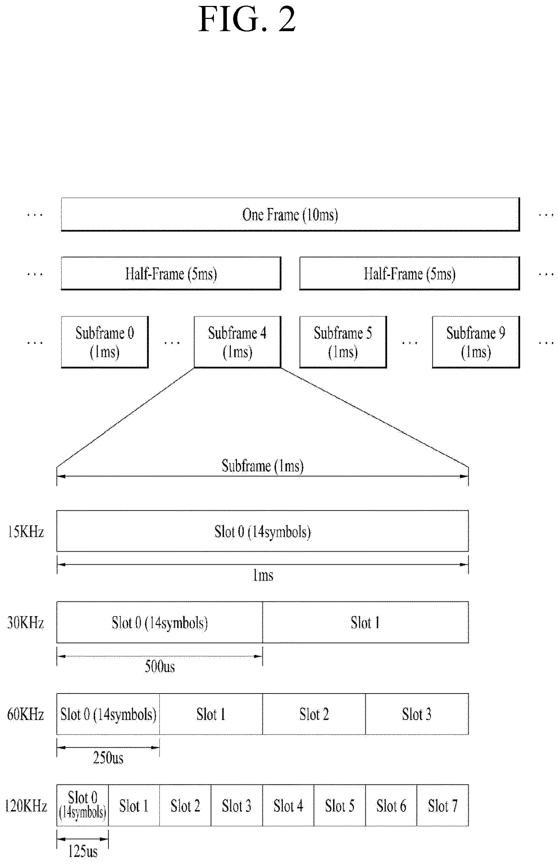

**FIG. 2 is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

**<Support of Various Numerologies>**

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by $\mu$).

[Table 2]

| $\mu$ | $\Delta f=2^{\mu}\cdot 15$ [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot ($N^{slot}_{symb}$), the number of slots per frame ($N^{frame,\mu}_{slot}$), and the number of slots per subframe ($N^{subframe,\mu}_{slot}$) according to each numerology expressed by $\mu$ in the case of a normal CP.

[Table 3]

| $\mu$ | $\Delta f=2^{\mu}\cdot 15$ [kHz] | $N^{slot}_{symb}$ | $N^{frame,\mu}_{slot}$ | $N^{subframe,\mu}_{slot}$ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |

(continued)

| μ | Δf=2$^μ$·15 [kHz] | N$^{slot}_{symb}$ | N$^{frame,μ}_{slot}$ | N$^{subframe,μ}_{slot}$ |
|---|---|---|---|---|
| 6 | 960 | 14 | 640 | 64 |

Table 4 below shows the number of OFDM symbols per slot (N$^{slot}_{symb}$), the number of slots per frame (N$^{frame,μ}_{slot}$), and the number of slots per subframe (N$^{subframe,μ}_{slot}$) of a numerology represented by μ in the case of an extended CP.

[Table 4]

| μ | SCS (15*2$^u$) | N$^{slot}_{symb}$ | N$^{frame,μ}_{slot}$ | N$^{subframe,μ}_{slot}$ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

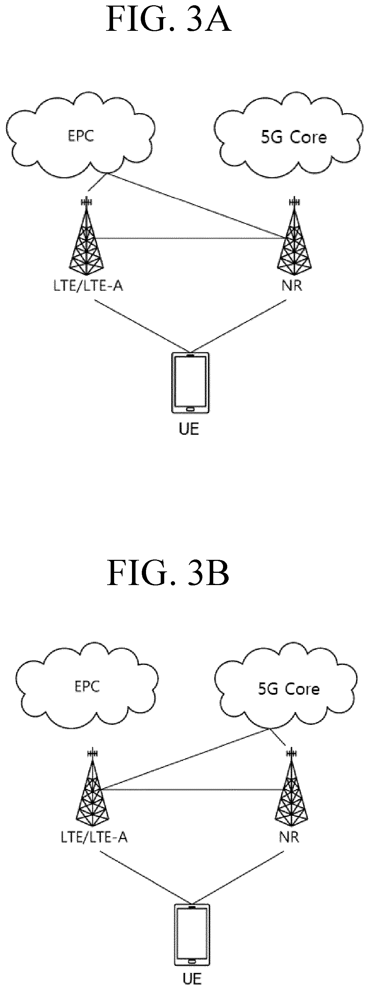

**FIGS. 3A to 3C illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

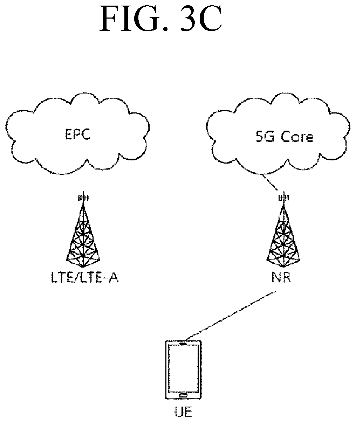

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

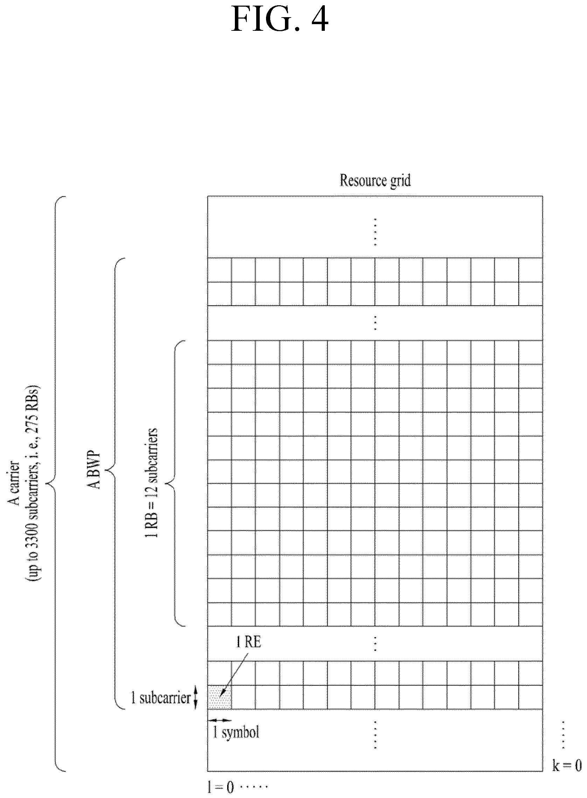

**FIG. 4 illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

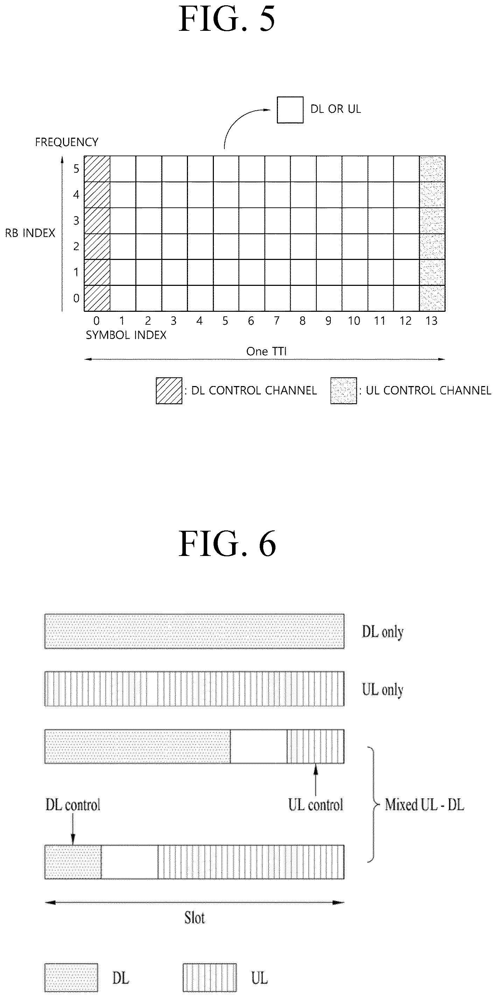

**FIG. 5 shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6 illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.

1. DL only configuration
2. UL only configuration
3. Mixed UL-DL configuration

– DL region + Guard Period (GP) + UL control region

– DL control region + GP + UL region

DL region: (i) DL data region, (ii) DL control region + DL data region

UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

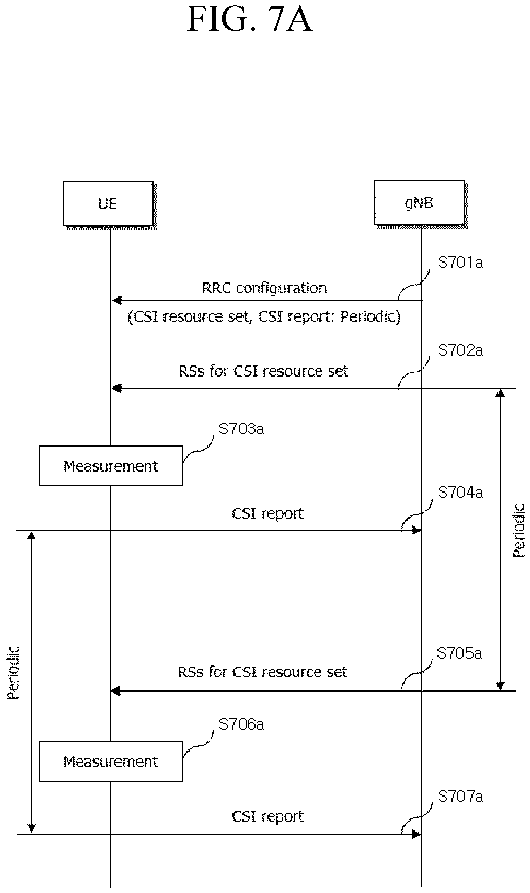

**FIGS. 7A to 7C show examples of a CSI reporting procedure in NR.**

In NR, cell measurement is performed based on layer 1 (L1) and layer 3 (L3) measurement results. Here, L1 measurement is reported by a channel state information (CSI) reporting method based on a CSI framework, and L3 measurement measures cell quality through L3 filtering based on the L1 measurement and reports the measured cell quality to the base station according to the configuration of the base station based on cells or based on beams. The typical L3 measurement defines the transmission of a radio resource control (RRC) message from a UE to the base station as being triggered based on an event configured by the base station to reduce overheads due to frequent reporting. However, the L1 measurement is defined to be performed periodically or according to the base station's instructions rather than being reporting based on the event.

The reporting of the L1 measurement result in NR is based on the RRC configuration of the base station similar to the L3 measurement result, and the 3GPP defines the reporting to be configured based on one of the following three methods.

- periodic reporting
- aperiodic reporting
- semi persistent reporting

FIG. 7A shows a periodic CSI reporting method, which is triggered through an RRC configuration. In other words, the UE receives an RRC configuration message from the base station, where the RRC configuration message contains configurations for CSI-related RS resources and a reporting method, including CSI resource set information and information that CSI reporting is periodic (S1101a). Then, the UE receives RSs transmitted periodically based on the received RRC configuration message (S702a and S705a) and measures the signal strength for a beam based on the received RSs (S703a and S706a). In addition, the UE reports a measured result (value) to the base station through periodically allocated physical uplink control channel (PUCCH) resources (S704a and S707a).

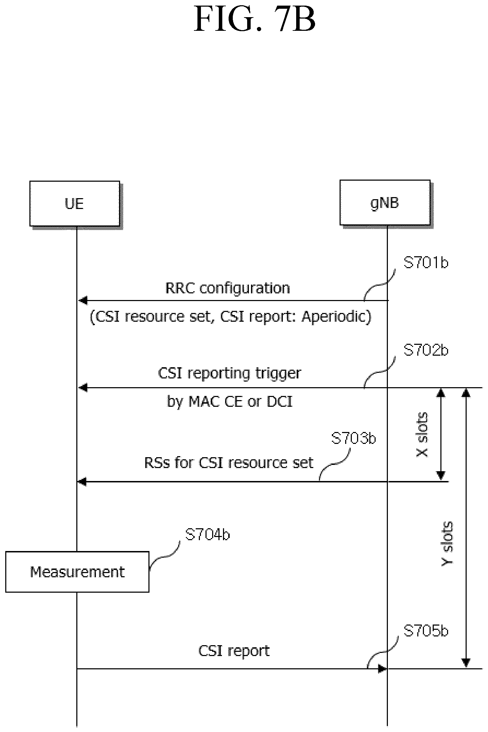

FIG. 7B shows an aperiodic CSI reporting method, in which beam measurement is not performed through the RS unless triggered by a trigger message (or information) from a lower layer, even though the CSI-related RS resources and the reporting methods are configured through the RRC configuration message. In other words, the UE receives the RRC configuration message, which contains configurations for CSI-related RS resources and a reporting method, including CSI resource set information and information that CSI reporting is aperiodic, from the base station (S701b), and a CSI report trigger is achieved through a medium access control (MAC) control element (CE) or downlink control information (DCI). The UE receives information about the CSI report trigger, which contains a trigger indication, from the base station through the MAC CE or DCI (S702b), and receives the RSs transmitted one time based on the received trigger indication (S703b). Here, the RSs for the CSI resource set may be transmitted after a specific time (e.g., X slots) has elapsed since the CSI report trigger information was transmitted. Then, the UE measures the signal strength of the beam based on the received RSs (S704b). In addition, the UE reports the measured result (value) a single time to the base station (S705b). Here, the CSI report may be transmitted after a specific time (e.g., Y slots) has elapsed since the CSI report trigger information was received.

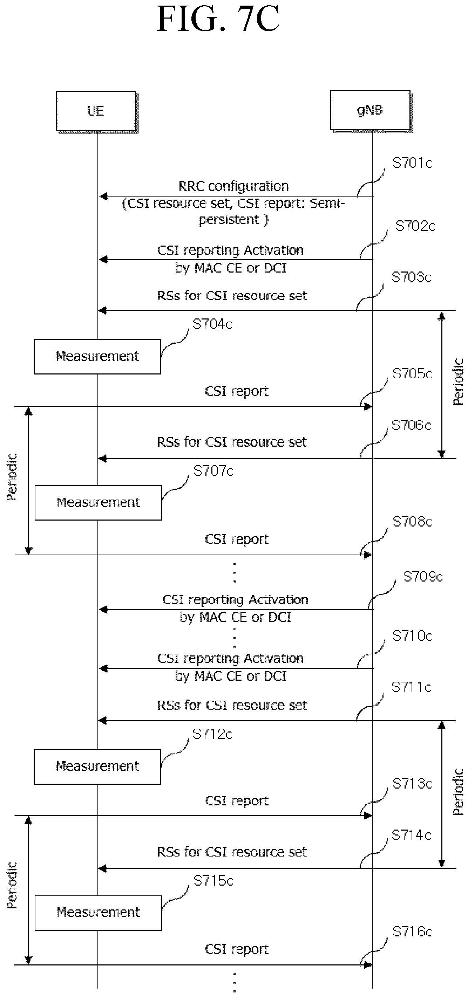

FIG. 7C shows a semi-persistent reporting method which is an intermediate method between the periodic reporting method and the aperiodic reporting method, where the UE receives configurations for the CSI-related RS resources and a reporting method through the RRC configuration message and performs the CSI report periodically only when activated by the MAC CE until it receives a deactivation message (or similar information). In other words, the UE receives the RRC configuration message from the base station, containing the configurations for the CSI-related RS resources and the reporting method, including the CSI resource set information and an indication that CSI reporting is semi-persistent, (S701c), where the CSI report activation is performed through the MAC CE. The UE receives the CSI report activation information including the activation indication from the base station through the MAC CE (S702c and S710c), and then receives the RSs transmitted periodically based on the received activation indication (S703c, S706c, S711c and S714c), and measures the signal strength of the beam based on the received RSs (S704c, S707c, S712c and S715c). In addition, the UE periodically reports the measured results (values) to the base station (S705c, S708c, S713c and S716c). After the CSI report activation, the UE stops the CSI reporting when the CSI report deactivation information including a deactivation indication is received from the base station through the MAC CE or DCI (S709c).

Meanwhile, NR frequently experiences link failures due to beamforming technology in high frequency bands. This also affects handover (HO) between the cells, and beam link failures may lead to frequent HO or HO failures. To solve this problem, NR mobility enhancement has been extensively discussed and new features have been recently defined as follows.

- Conditional HO (CHO) in Rel-16
- Inter-Cell Beam Management (ICBM) in Rel-17
- Lower-layer Triggered Mobility (LTM) in Rel-18

The ICBM and the LTM use the L1 measurement result for the neighboring cell to immediately configure the beam of the neighboring cell or reduce interruption time, which occurs due to HO, through a cell switch based on the L2 control information, thereby performing the HO more efficiently and rapidly. However, with the introduction of such new features, there is a need for the UE to report not only the L1 measurement result for the serving cell but also the L1 measurement result for the neighboring cell to the base station. To support this, 'LTM-CSI-ReportConfig IE' was newly defined as shown in Table 5.

[Table 5]

```
-- ASN1START
-- TAG-LTM-CSI-REPORTCONFIG-START


LTM-CSI-ReportConfig-r18 ::=          SEQUENCE {
        ltm-CSI-ReportConfigId-r18                                  LTM-CSI-
ReportConfigId-r18,
        ltm-ResourcesForChannelMeasurement-r18                      LTM-CSI-
ResourceConfigId-r18,
        ltm-ReportConfigType-r18                          CHOICE {
            periodic-r18                                 SEQUENCE {
                reportSlotConfig-r18                             CSI-
ReportPeriodicityAndOffset,
                pucch-CSI-ResourceList-r18
SEQUENCE (SIZE (1..maxNrofBWPs)) OF PUCCH-CSI-Resource
            },
            semiPersistentOnPUCCH-r18                          SEQUENCE
{
                reportSlotConfig-r18                             CSI-
ReportPeriodicityAndOffset,
                pucch-CSI-ResourceList-r18
SEQUENCE (SIZE (1..maxNrofBWPs)) OF PUCCH-CSI-Resource
            },
            semiPersistentOnPUSCH-r18                          SEQUENCE
{
                reportSlotConfig-r18                             CSI-
ReportPeriodicityAndOffset,
                reportSlotOffsetList-r18                        SEQUENCE
(SIZE (1.. maxNrofUL-Allocations-r16)) OF INTEGER (0..128),
                reportSlotOffsetListDCI-0-2-r18                 SEQUENCE
(SIZE (1.. maxNrofUL-Allocations-r16)) OF INTEGER (0..128),
                reportSlotOffsetListDCI-0-1-r18                 SEQUENCE
(SIZE (1.. maxNrofUL-Allocations-r16)) OF INTEGER (0..128),
                p0alpha                                          P0-
PUSCH-AlphaSetId
```

```
            },
        aperiodic-r18                                    SEQUENCE {
            reportSlotOffsetList-r18                     SEQUENCE
(SIZE (1.. maxNrofUL-Allocations-r16)) OF INTEGER (0..128),
            reportSlotOffsetListDCI-0-2-r18              SEQUENCE
(SIZE (1.. maxNrofUL-Allocations-r16)) OF INTEGER (0..128),
            reportSlotOffsetListDCI-0-1-r18              SEQUENCE
(SIZE (1.. maxNrofUL-Allocations-r16)) OF INTEGER (0..128)
            },
            ...
        },
        ltm-ReportContent-r18                      LTM-ReportContent-r18,
        ...
}


LTM-ReportContent-r18 ::=        SEQUENCE {
        nrOfReportedCells-r18                          ENUMERATED
{n1,n2,n3,n4},
        nrOfReportedRS-PerCell-r18                     ENUMERATED
{n1,n2,n3,n4},
        spCellInclusion-r18                       ENUMERATED {true}
OPTIONAL -- Need R
}


-- TAG-LTM-CSI-REPORTCONFIG-STOP
-- ASN1STOP
```

As included in the 'LTM-CSI-ReportConfig IE' of Table 5, the L1 measurement for the LTM may include information about up to 4 RSs for up to 4 candidate cells, which may be reported as one of the same types defined for the typical CSI report according to the configurations of the base station.

This may allow up to four times more L1 measurement results to be reported than before. However, because the reporting time of the typical L1 measurement result is determined by the base station, the base station may require frequent L1 measurement result reporting to determine an appropriate time for the cell switching or beam switching. This configures the reporting to be performed periodically or aperiodically for appropriate cell switching, thereby causing an increase in overheads for overall L1 measurement reporting. In the 3GPP, an attempt has been made to define the L1 measurement reporting triggered by the UE for the purpose of reducing the overheads for the L1 measurement reporting. This may only be applied to LTM technology, but it is also expected to be applied to overall CSI-related reporting to reduce the overheads associated with the L1 measurement reporting.

Meanwhile, for the UE to transmit the L1 measurement results to the base station to reduce the overheads associated with L1 measurement reporting, there is a need for assigning or activating physical uplink control channel (PUCCH) or physical uplink shared channel (PUSCH) resources to transmit the L1 measurement results. However, there is currently no way to activate or request the PUCCH or PUSCH resources. Accordingly, it is necessary to define request signaling for the L1 measurement reporting triggered by the UE and an L1 reporting procedure using the request signaling.

According to the embodiment, for the UE to trigger the L1 measurement reporting, L1/L2 signaling (e.g., CSI Reporting Scheduling Request) for requesting the base station to activate the PUCCH or PUSCH resources configured for the L1 measurement reporting is specifically defined, and an L1 measurement result reporting procedure using the same is proposed.

In more detail, the L1/L2 signaling may be:

- defined by scheduling request (SR) PUCCH resources, or
- assigned a dedicated preamble, or
- defined by the MAC CE.

When the base station performs an (LTM) CSI report configuration for the UE, an event-triggered report type may be defined as a new report type in addition to the typical periodic/aperiodic/semi-persistent type. This may be assigned an SR PUCCH or a dedicated preamble along with information about one or more events configured by the base station. When a CSI report configuration including an event-triggered PUCCH/PUSCH is configured for the UE, the corresponding (LTM) CSI report configuration may include at least one of the following pieces of information.

- One or more pieces of event information. Here, the event refers to an event defined according to an RSRP threshold value for the measured CSI-RS/SSB of the serving/candidate cell and/or an offset value between the measured RSRP of the serving/candidate cell. One or more events may be defined by various combinations.
- Information configured for the CSI report. Here, the information may be defined to be associated with the CSI resource configuration used for the CSI report. Alternatively, the information may be defined to be associated with a CSI report configuration defined as the aperiodic/semi-persistent report type (e.g., including CSI report configuration ID defined as the aperiodic/semi-persistent report type). Alternatively, relevant report information (PUCCH resource information for the aperiodic or semipersistent type, CSI-ReportPeriodicityAndOffset, reportSlotOffsetList, etc.) may be included in the corresponding CSI report configuration.
- SR PUCCH or dedicated preamble information used to notify that any event has occurred.
- Content information to be reported.

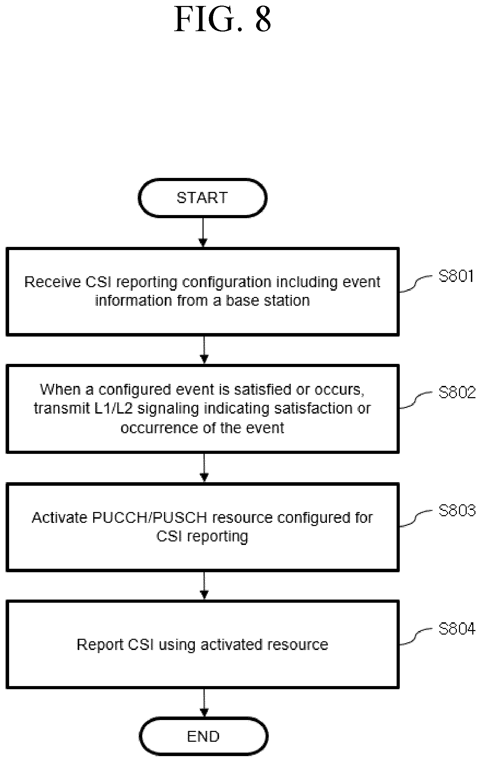

**FIG. 8 is a flowchart showing an operation method of a UE according to an embodiment of the present specification.**

Referring to FIG. 8, the UE receives the CSI reporting configuration including the event information (e.g., an event defined according to the threshold value and/or offset value for the measured CSI-RS/SSB of the serving/candidate cell) for the L1 measurement reporting from the base station (S801). Here, the CSI report configuration may be received through the RRC message.

Then, when the configured event is satisfied or occurs, the UE transmits the L1/L2 signaling for notifying the satisfaction or occurrence of the event to the base station (S802). If resource information for the L1 signaling (e.g., SR PUCCH resource or dedicated preamble resource information) is contained in the message for transmitting the CSI report configuration, and there are no available UL resources capable of transmitting the MAC CE among the uplink (UL) resources allocated to the UE, the UE transmits the L1 signaling allocated by the base station and requests the base station to activate the PUCCH/PUSCH resources configured for the CSI report. If there are available UL resources to transmit the MAC CE, the MAC CE notifying that there has been the CSI report triggered by the event is transmitted. Here, the base station may indicate the activation of the configured PUCCH/PUSCH resources using the downlink control information (DCI) or MAC CE, and thus the UE activates the indicated PUCCH/PUSCH resources (S803). Then, the UE performs the CSI report through the activated PUCCH or PUSCH resources (S804).

Below, a specific method for the L1/L2 signaling enabling the UE to trigger the CSI report, i.e., to request the base station to activate the resources for the CSI report is introduced.

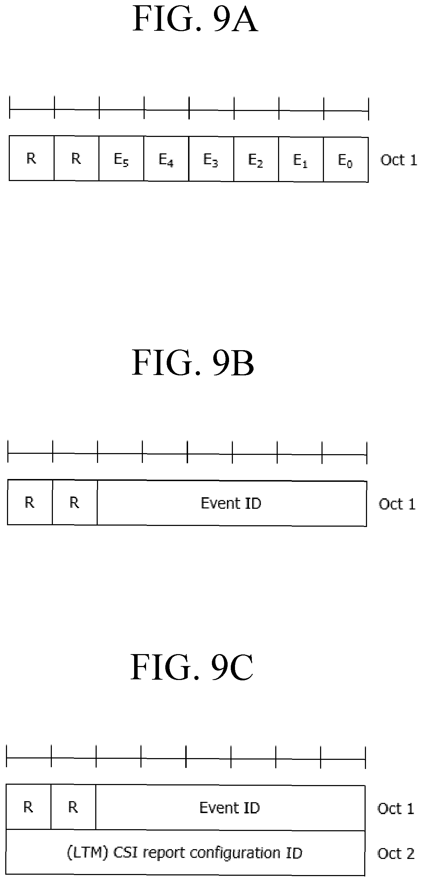

**FIGS. 9A to 9F are diagrams illustrating the CSI reporting scheduling request MAC CE formats according to an embodiment.**

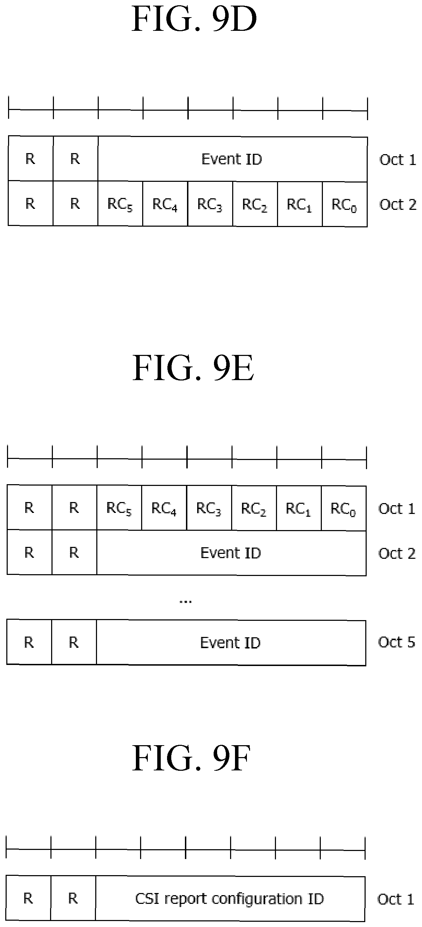

First, as shown in FIGS. 9A to 9F, the MAC CE for (LTM) CSI Reporting Scheduling Request is defined. The (LTM) CSI Reporting Scheduling Request MAC CE may include at least event information that triggered the MAC CE (or information for distinguishing the size of CSI information to be reported). Here, the event information may be recognized in various ways. For example, when up to one piece of event information is included in one CSI report configuration, the event information may be recognized by CSI report configuration ID (FIG. 9F). In this case, the ID may be sequentially mapped to $n E_i$ in order from the lowest CSI report configuration ID (lowest CSI report config ID) and indicated in a bitmap format (FIG. 9A). However, there may also be many CSI report configurations (e.g., aperiodic/periodic/semi-persistent report types) that do not include event information, and it may therefore be desirable to introduce a unique event ID for each event defined for the CSI report configuration. The newly defined event ID may be sequentially mapped to $n E_i$ and indicated in a bitmap format (FIG. 9A) or may be indicated including the event ID explicitly (FIG. 9B). When one or more events are defined in the CSI report configuration, and there are one or more CSI report configurations containing one or more pieces of event information. Furthermore, the event ID for the specific CSI report configuration may be defined to be indicated in the MAC CE. This means that each ID is defined in a bitmap format or in a format including the ID depending on the length and features (according to whether it is necessary to notify the occurrence of one or more events, when the events are satisfied at the same time) (FIGS. 9C, FIG. 9D, and FIG. 9E). In FIGS. 9A to 9F, "R" represents a reserved bit, "$E_i$" represents an event bit, and "$RC_i$" represents a report configuration bit.

Hereinafter, the operations of the UE and the base station using "CSI Reporting SR MAC CE" according to an embodiment will be described.

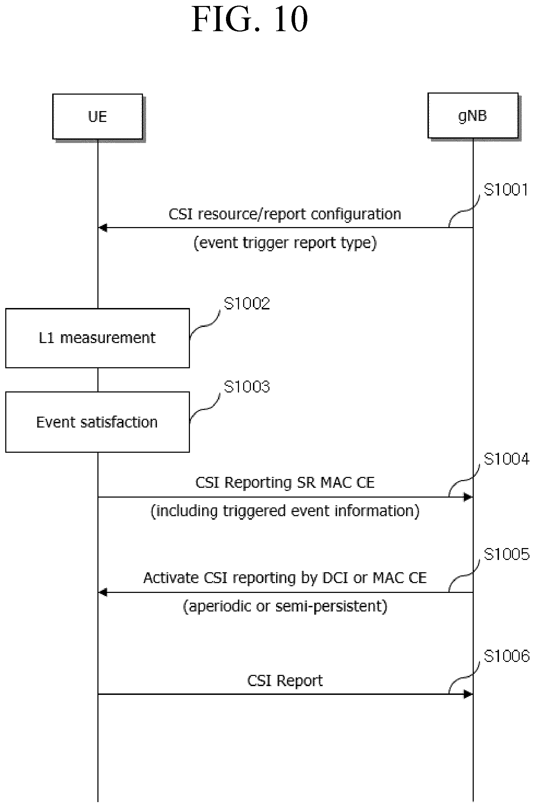

**FIG. 10 shows a procedure between a UE and a base station according to an embodiment.**

First, the operations of the UE will be described in detail with reference to FIG. 10.

The UE receives a CSI report configuration containing one or more pieces of event information from the base station (S1001). Here, there may be a CSI resource configuration associated with the CSI report configuration. An additional CSI report configuration associated with the event information may be present. In this case, it may be associated with a semi-persistent/aperiodic type configuration.

Measurement of CSI-RS/SSB is performed according to the CSI resource configuration associated with the CSI report configuration (S 1002).

When it is identified through the measurement result that at least one event among the configured events is satisfied (S1003), the (LTM) CSI Reporting Scheduling Request MAC CE is triggered and transmitted to the base station (S1004). When there are no UL resources to transmit the triggered MAC CE, a resource request may be made through scheduling request (SR)/(buffer status report (BSR)/random access channel (RACH).

Then, the UE receives the DCI or MAC CE indicating the activation of resources for the CSI report from the base station (S 1005). The UE performs the CSI report using the activated resources, for example, transmits the CSI report to the base station (S1006).

Additionally, the operations of the base station will be described in detail with reference to FIG. 10.

The base station transmits a CSI report configuration containing one or more pieces of event information to the UE (S1001). Here, there may be a CSI resource configuration associated with the CSI report configuration. An additional CSI report configuration associated with the event information may be present. In this case, it may be associated with a semi-persistent/aperiodic type configuration.

The base station transmits the CSI-RS/SSB according to the CSI resource configuration associated with the CSI report configuration, and the base station receives the (LTM) CSI Reporting Scheduling Request MAC CE from the UE (S1004).

Then, based on the information of the CSI report scheduling request MAC CE received from the UE, the base station transmits the DCI or MAC CE indicating the activation of PUCCH or PUSCH resources for receiving relevant/appropriate CSI information associated with the CSI report scheduling request MAC CE to the UE (S1005). In addition, the base station receives CSI measurement result information, i.e., the CSI report from the UE (S1006).

Next, the disclosure propose defining the scheduling request (SR) PUCCH or the dedicated preamble as the L1 signaling for the (LTM) CSI Reporting Scheduling Request. The (LTM) CSI Reporting Scheduling Request may be defined in one of the following three ways.

1. As an indicator for requesting available UL resources to transmit the previously proposed "CSI Reporting Scheduling Request MAC CE," which has been triggered. In this case, the L1 signaling refers to UE-specific signaling, and the base station that receives the L1 signaling allocates resources to receive "CSI Reporting SR MAC CE".

2. As an indicator to show that the L1 reporting is triggered by at least one of the events configured by the CSI report configuration. In this case, the L1 signaling refers to UE-specific signaling, and the base station that receives the L1 signaling may activate resources for the CSI reporting through DCI/MAC CE transmission.

3. As an indicator to indicate that the CSI reporting is triggered by a specific event (or reporting resources related to the specific event) among one or more events configured by the CSI report configuration. In this case, the L1 signaling refers to event-specific signaling, and is assigned the SR PUCCH or dedicated preamble for each configured event. The base station that receives the L1 signaling may activate resources for the CSI reporting through DCI or MAC CE transmission.

The foregoing case of No. 1 or 3 may be applied when the contents to be transmitted as part of the CSI reporting are assigned different amounts of information depending on the events associated with the UE. Alternatively, for this reason, when resource allocation for varying amounts of L1 reporting is needed, the case of No. 1 or 3 may be used to notify the base station of the CSI report information (e.g., the RSs for 1 or 2 or 3 or 4 cells) instead of the event information. When the base station requests the same amount of report information regardless of whether it receives the report based on any event, each UE may be assigned one PUCCH resource or dedicated preamble to recognize the need for L1 reporting, similar to the case of No. 2. The base station selects a semi-persistent or aperiodic reporting type as the report configuration method, thereby activating resources for a CSI report and performing an appropriate CSI report.

Hereinafter, the operations of the UE and the base station using the L1 signaling according to an embodiment will be described.

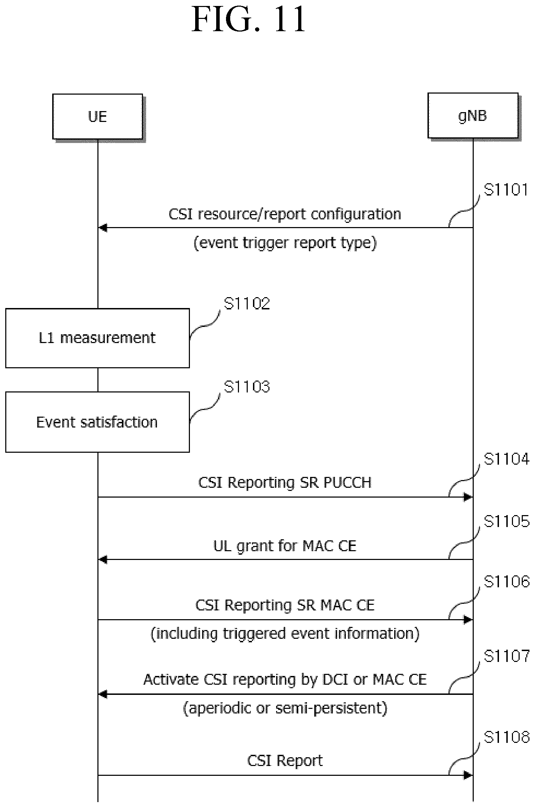

**FIG. 11 shows a procedure between a UE and a base station according to another embodiment.**

First, the operations of the UE will be described in detail with reference to FIG. 11.

The UE receives a CSI report configuration containing one or more pieces of event information from the base station (S1101). Here, there may be a CSI resource configuration associated with the CSI report configuration. An additional CSI report configuration associated with the event information may be present. In this case, it may be associated with a semi-persistent/aperiodic type configuration. The CSI report configuration or CSI resource configuration may include the SR PUCCH or dedicated preamble resource information to indicate triggering of the "CSI Reporting SR MAC CE".

Measurement of CSI-RS/SSB is performed according to the CSI resource configuration associated with the CSI report configuration (S1102).

When it is identified through the measurement result that at least one event among the configured events is satisfied (S1103), the (LTM) CSI Reporting Scheduling Request MAC CE is triggered and transmitted to the base station (S1106). When there are no UL resources to transmit the triggered MAC CE, the assigned CSI report SR PUCCH or dedicated preamble is transmitted to the base station (S1104). When there are UL resources to transmit the triggered MAC CE, the "CSI Reporting SR MAC CE" is transmitted using the available UL resources.

The UE receives the DCI for a UL grant from the base station (S1105). When the DCI is not to indicate the activation of resources for the CSI report, the UE uses the allocated resources to transmit the "(LTM) CSI Reporting Scheduling Request MAC CE." When the DCI for the UL grant is received from the base station, the DCI contains information to indicate the activation of the resource for the CSI report, and the triggered "CSI Reporting SR MAC CE" is present, the transmission of the triggered "(LTM) CSI Reporting Scheduling Request MAC CE" is canceled. When the MAC CE of activating "semi-persistent (SP) CSI report on PUCCH" is received from the base station, and the triggered "CSI Reporting SR MAC CE" is present, the transmission of the triggered "(LTM) CSI Reporting Scheduling Request MAC CE" is cancelled.

When the UE receives the DCI or MAC CE indicating the activation of resources for the CSI report from the base station (S1107), the UE performs the CSI report using the activated resources, for example, transmits the CSI report to the base station (S1108).

In addition, the operations of the base station will be described in detail with reference to FIG. 11.

The base station transmits a CSI report configuration containing one or more pieces of event information to the UE (S1101). Here, there may be a CSI resource configuration associated with the CSI report configuration. An additional CSI report configuration associated with the event information may be present. In this case, it may be associated with a semi-persistent/aperiodic type configuration. The CSI report configuration or CSI resource configuration may include the SR PUCCH or dedicated preamble resource information to indicate triggering of the "CSI Reporting SR MAC CE".

The base station transmits the CSI-RS/SSB according to the CSI resource configuration associated with the CSI report configuration, and the base station receives the (LTM) CSI Reporting Scheduling Request MAC CE from the UE (S1106). When the base station receives the CSI report SR PUCCH or the dedicated preamble from the UE to request the activation of the CSI resources (S1104) and is configured to instruct the activation of the CSI resources without the "CSI Reporting SR MAC CE", the base station transmits the DCI or MAC CE indicating the activation of resources for the CSI report to the UE (S1107). When the base station receives the CSI report SR PUCCH or the dedicated preamble from the UE to request the activation of the CSI resources (S1104) and is configured to receive the "CSI Reporting SR MAC CE" from the UE, the base station transmits the UL grant for the "CSI Reporting SR MAC CE" to the UE (S 1105).

When the base station transmits the UL grant for the "CSI Reporting SR MAC CE" to the UE, the base station receives the "CSI Reporting SR MAC CE" from the UE, and the base station transmits the DCI or MAC CE indicating the activation of PUCCH or PUSCH resources for receiving relevant/appropriate CSI information associated with the CSI Reporting SR MAC CE to the UE according to the received "CSI Reporting SR MAC CE" information (S 1007). In addition, the base station receives CSI measurement result information, i.e., the CSI report from the UE (S 1008).

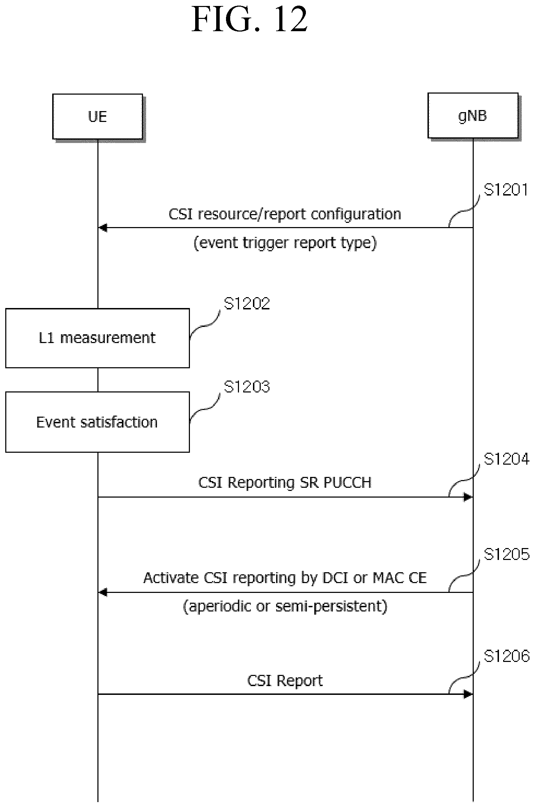

**FIG. 12 shows a procedure between a UE and a base station according to another embodiment.**

First, the operations of the UE will be described in detail with reference to FIG. 12.

The UE receives a CSI report configuration containing one or more pieces of event information from the base station (S1201). Here, there may be a CSI resource configuration associated with the CSI report configuration. An additional CSI report configuration associated with the event information may be present. In this case, it may be associated with a semi-persistent/aperiodic type configuration. The CSI report configuration or CSI resource configuration may include the SR PUCCH or dedicated preamble resource information to indicate triggering of the CSI Reporting SR.

Measurement of CSI-RS/SSB is performed according to the CSI resource configuration associated with the CSI report configuration (S 1202).

When it is identified through the measurement result that at least one event among the configured events is satisfied (S1203), the (LTM) CSI Reporting Scheduling Request is triggered and transmitted to the base station (S1204). When there is an SR PUCCH for the (LTM) CSI Reporting Scheduling Request assigned to the UE, the corresponding SR PUCCH is transmitted (S1204). When there is no SR PUCCH for the (LTM) CSI Reporting Scheduling Request assigned to the UE and when there is the dedicated preamble for the (LTM) CSI Reporting Scheduling Request, a RACH procedure based on the dedicated preamble is started.

Then, the UE receives the DCI or MAC CE indicating the activation of resources for the CSI report from the base station (S1205), and the UE performs the CSI report using the activated resources, for example, transmits the CSI report to the base station (S 1206).

In addition, the operations of the base station will be described in detail with reference to FIG. 12.

The base station transmits a CSI report configuration containing one or more pieces of event information to the UE (S1201). Here, there may be a CSI resource configuration associated with the CSI report configuration. An additional CSI report configuration associated with the event information may be present. In this case, may be associated with a semi-persistent/aperiodic type configuration. The CSI report configuration or CSI resource configuration may include the SR PUCCH or dedicated preamble resource information to indicate triggering of the CSI Reporting SR.

The base station transmits the CSI-RS/SSB according to the CSI resource configuration associated with the CSI report configuration, and the base station receives the SR PUCCH or dedicated preamble for the (LTM) CSI Reporting Scheduling Request from the UE (S1204).

Then, the base station transmits the DCI or MAC CE indicating the activation of resources for the CSI report to the UE (S1205). In addition, the base station receives the CSI measurement result information, i.e., the CSI report, from the UE (S1206).

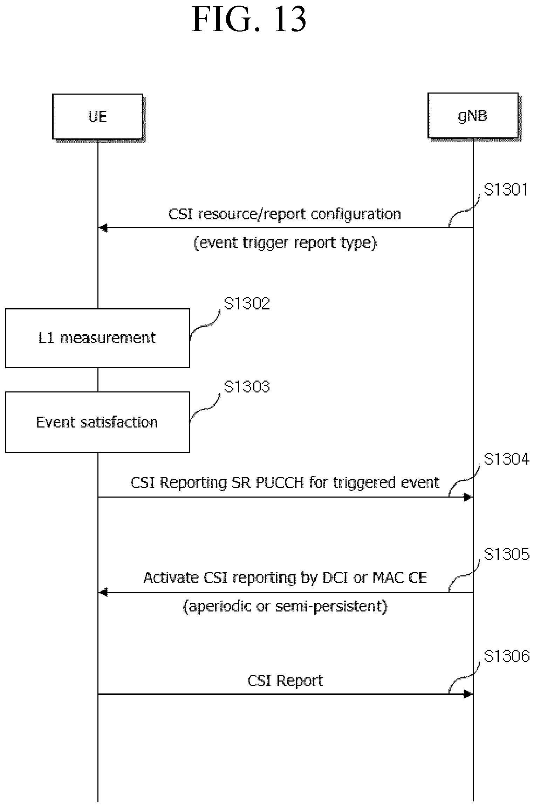

**FIG. 13 shows a procedure between a UE and a base station according to another embodiment.**

First, the operations of the UE will be described in detail with reference to FIG. 13.

The UE receives a CSI report configuration containing one or more pieces of event information from the base station (S1301). Here, there may be a CSI resource configuration associated with the CSI report configuration. An additional CSI report configuration associated with the event information may be present. In this case, it may be associated with a semi-persistent/aperiodic type configuration. The CSI report configuration or CSI resource configuration may include one or more pieces of SR PUCCH or dedicated preamble resource information to indicate triggering of the CSI Reporting SR, as well as event information corresponding to each SR PUCCH or dedicated preamble and information associated with the event information.

Measurement of CSI-RS/SSB is performed according to the CSI resource configuration associated with the CSI report configuration (S1302).

When it is identified through the measurement result that at least one event among the configured events is satisfied (S1303), the (LTM) CSI Reporting Scheduling Request is triggered and transmitted to the base station (S1304). When there is an SR PUCCH for the (LTM) CSI Reporting Scheduling Request assigned to the corresponding event of the UE, the corresponding SR PUCCH is transmitted (S1304). When there is no SR PUCCH for the (LTM) CSI Reporting Scheduling Request assigned to the corresponding event of the UE, and if there is the dedicated preamble for the (LTM) CSI Reporting Scheduling Request assigned to the corresponding event, a RACH procedure based on the dedicated preamble is started.

Then, the UE receives a DCI or MAC CE indicating the activation of resources for the CSI report from the base station (S1305), and the UE performs the CSI report using the activated resources, that is, transmits it to the base station (S1306).

Then, the UE receives the DCI or MAC CE indicating the activation of resources for the CSI report from the base station (S1305), and performs the CSI report using the activated resources, that is, transmits the CSI report to the base station (S1306).

Additionally, the operations of the base station will be described in detail with reference to FIG. 13.

The base station transmits a CSI report configuration containing one or more pieces of event information to the UE (S1201). Here, there may be a CSI resource configuration associated with the CSI report configuration. An additional CSI report configuration associated with the event information may be present. In this case, it may be associated with a semi-persistent/aperiodic type configuration. The CSI report configuration or CSI resource configuration may include one or more pieces of SR PUCCH or dedicated preamble resource information to indicate triggering of the CSI Reporting SR, as well as event information corresponding to each SR PUCCH or dedicated preamble and information associated with the event information.

The base station transmits the CSI-RS/SSB according to the CSI resource configuration associated with the CSI report configuration and receives the SR PUCCH or dedicated preamble for the (LTM) CSI Reporting Scheduling Request from the UE (S1304).

Based on the event associated with the CSI Reporting SR PUCCH or dedicated preamble received from the UE, the base station transmits the DCI or MAC CE indicating the activation of PUCCH or PUSCH resources for the associated appropriate CSI report to the UE (S1305). In addition, the base station receives the CSI measurement result information, for example, the CSI report, from the UE (S1306)

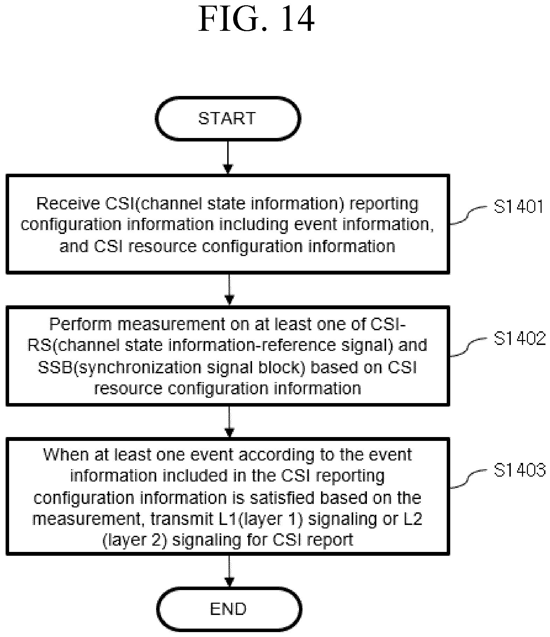

**FIG. 14 is a flowchart showing an operation method of a UE according to an embodiment.**

Referring to FIG. 14, the UE receives channel state information (CSI) report configuration information including event information and CSI resource configuration information from the base station (S1401). In addition, the UE performs measurement for at least one of a channel state information-reference signal (CSI-RS) and a synchronization signal block (SSB) based on the CSI resource configuration information (S1402). Then, when at least one event based on the event information included in the CSI report configuration information is satisfied based on the measurement, the UE transmits layer 1 (L1) signaling or layer 2 (L2) signaling for the CSI report to the base station (S1403).

Meanwhile, after transmitting the L1 signaling or the L2 signaling for the CSI report, the UE may receive information indicating the activation of the CSI report from the base station and transmit the CSI report to the base station according to the information indicating the activation of the received CSI report.

The L2 signaling for the CSI report may include a medium access control (MAC) control element (CE), and the MAC CE may include information about the at least one event. Here, the information about the at least one event may include at least one CSI report configuration identity (ID). In addition, the L1 signaling for the CSI report may be to request uplink resources for the MAC CE.

Further, the L1 signaling for the CSI report may include at least one of a dedicated scheduling request (SR) physical uplink control channel (PUCCH) and a dedicated preamble.

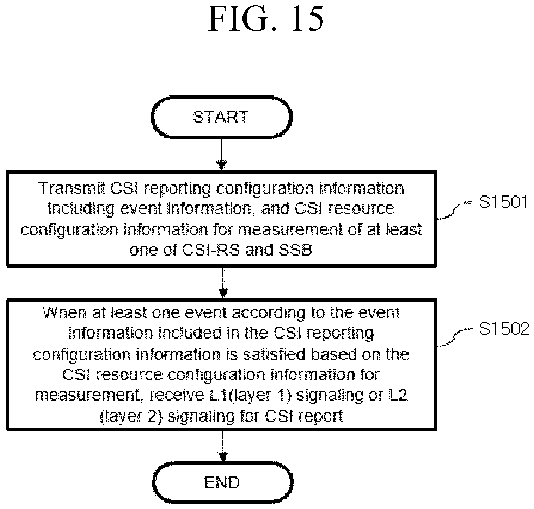

**FIG. 15 is a flowchart showing an operation method of a base station according to another embodiment of the present specification.**

Referring to FIG. 15, the base station transmits CSI report configuration information including event information and CSI resource configuration information for measurement of at least one of a CSI-RS and an SSB to the UE (S1501). Then, when at least one event based on the event information included in the CSI report configuration information is satisfied based on the CSI resource configuration information for the measurement, the base station receives layer 1 (L1) signaling or layer 2 (L2) signaling for the CSI report from the UE (S1502).

Meanwhile, after receiving the L1 signaling or the L2 signaling for the CSI report, the base station may transmit information indicating the activation of the CSI report to the UE, and the base station receive the CSI report from the UE according to the information indicating the activation of the transmitted CSI report.

The L2 signaling for the CSI report may include a medium access control (MAC) control element (CE). The MAC CE may include information about the at least one event. Here, the information about the at least one event may include at least one CSI report configuration identity (ID). In addition, the L1 signaling for the CSI report may be to request uplink resources for the MAC CE.

Further, the L1 signaling for the CSI report may include at least one of a dedicated scheduling request (SR) physical uplink control channel (PUCCH) and a dedicated preamble.

The embodiments of the disclosures may be applied independently of each other or may be combined and operated in any form. Further, the embodiments are described based on the 5G NR system in the disclosure. However, the embodiments are not limited thereto All cases where the concept of the embodiments is applied may fall into the scope of the disclosure regardless of the specific wireless communication technology involved.

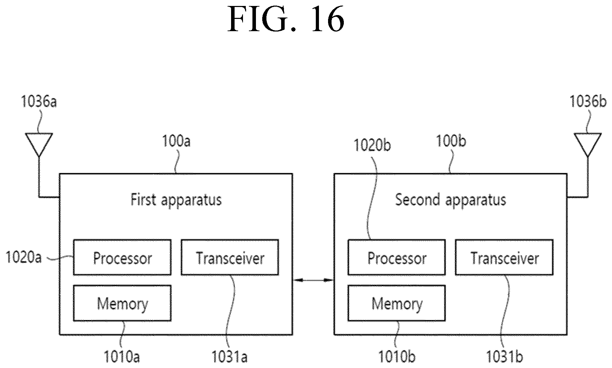

**FIG. 16 is a block diagram showing apparatuses according to an embodiment of the disclosure.**

Referring to FIG. 16, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a, and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

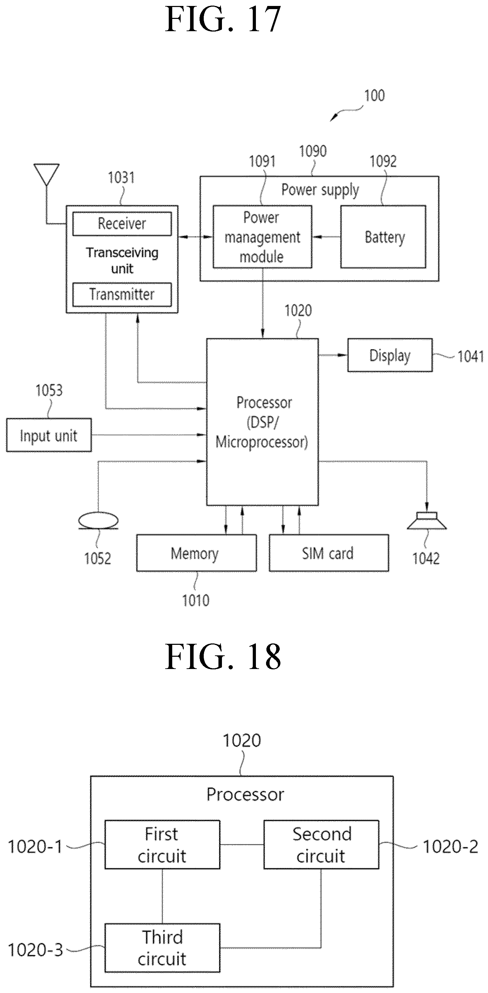

**FIG. 17 is a block diagram showing a terminal according to an embodiment of the disclosure.**

In particular, FIG. 17 illustrates the previously described apparatus of FIG. 16 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel®, KIRIN™ series of processors made by HiSilicon®, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application . In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

**FIG. 18 is a block diagram of a processor in accordance with an embodiment.**

Referring to FIG. 18, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

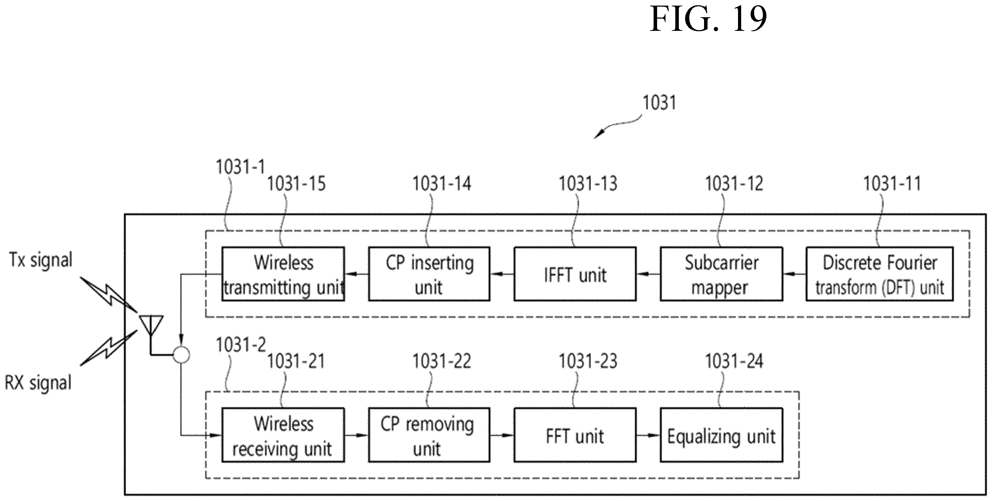

**FIG. 19 is a detailed block diagram of a transceiver of a first apparatus shown in FIG. 16 or a transceiving unit of an apparatus shown in FIG. 17.**

Referring to FIG. 19, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the disclosure of the present specification, the UE timely reports the layer 1 (L1) measurement result based on the event configured by the base station, thereby having an effect on reducing uplink signaling overheads.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

**Claims**

1. A method of operating a terminal in a wireless communication system, comprising:

   receiving i) channel state information (CSI) reporting configuration information comprising event information and ii) CSI resource configuration information;
   performing measurement on at least one of a channel state information-reference signal (CSI-RS) and a synchronization signal block (SSB) based on the CSI resource configuration information; and
   transmitting layer 1 (L1) signaling or layer 2 (L2) signaling for a CSI report, upon satisfaction of at least one event according to the event information included in the CSI reporting configuration information based on the measurement.

2. The method of claim 1, further comprising:

   receiving information that indicates activation of the CSI report, after transmitting the L1 signaling or the L2 signaling; and
   transmitting the CSI report based on the information that indicates the activation of the CSI report.

3. The method of claim 1, wherein

   the L2 signaling comprises a medium access control (MAC) control element (CE), and
   the MAC CE comprises information about the at least one event.

4. The method of claim 3, wherein the information about the at least one event comprises at least one CSI reporting configuration identity (ID).

5. The method of claim 3, wherein the L1 signaling is to request uplink resources for the MAC CE.

6. The method of claim 1, wherein the L1 signaling comprises at least one of dedicated scheduling request (SR) physical uplink control channel (PUCCH) and a dedicated preamble.

7. A method of operating a base station in a wireless communication system, comprising:

   transmitting i) channel state information (CSI) reporting configuration information including event information and ii) CSI resource configuration information for measurement of at least one of a channel state information-reference signal (CSI-RS) and a synchronization signal block (SSB); and
   receiving layer 1 (L1) signaling or layer 2 (L2) signaling for a CSI report, upon satisfaction of at least one event according to the event information included in the CSI reporting configuration information based on the CSI resource configuration information for the measurement.

8. The method of claim 7, further comprising

   transmitting information that indicates activation of the CSI report, after receiving the L1 signaling or the L2 signaling; and
   receiving the CSI report based on the information that indicates the activation of the CSI report.

9. The method of claim 7, wherein

   the L2 signaling comprises a medium access control (MAC) control element (CE), and
   the MAC CE comprises information about the at least one event.

10. The method of claim 9, wherein the information about the at least one event comprises at least one CSI reporting configuration identity (ID).

**11.** The method of claim 9, wherein the L1 signaling is to request uplink resources for the MAC CE.

**12.** The method of claim 7, wherein the L1 signaling comprises at least one of dedicated scheduling request (SR) physical uplink control channel (PUCCH) and a dedicated preamble.

**13.** A terminal in a wireless communication system, comprising:

at least one processor; and
at least one memory configured to store instructions and be operably electrically connectable to the at least one processor,
wherein operations performed based on the instructions executed by the at least one processor comprise:

receiving i) channel state information (CSI) reporting configuration information comprising event information and ii) CSI resource configuration information;
performing measurement on at least one of a channel state information-reference signal (CSI-RS) and a synchronization signal block (SSB) based on the CSI resource configuration information; and
transmitting layer 1 (L1) signaling or layer 2 (L2) signaling for a CSI report, upon satisfaction of at least one event according to the event information included in the CSI reporting configuration information based on the measurement.

**14.** The terminal of claim 13, wherein the operations performed based on the instructions executed by the at least one processor further comprise:

receiving information that indicates activation of the CSI report, after transmitting the L1 signaling or the L2 signaling; and
transmitting the CSI report based on the information that indicates the activation of the CSI report.

**15.** The terminal of claim 13, wherein

the L2 signaling comprises a medium access control (MAC) control element (CE), and
the MAC CE comprises information about the at least one event.

# FIG. 1

# FIG. 2

| ⋯ | One Frame (10ms) | ⋯ |

| ⋯ | Half-Frame (5ms) | Half-Frame (5ms) | ⋯ |

| ⋯ | Subframe 0 (1ms) | ⋯ | Subframe 4 (1ms) | Subframe 5 (1ms) | ⋯ | Subframe 9 (1ms) | ⋯ |

Subframe (1ms)

| 15KHz | Slot 0 (14symbols) |

1ms

| 30KHz | Slot 0 (14symbols) | Slot 1 |

500us

| 60KHz | Slot 0 (14symbols) | Slot 1 | Slot 2 | Slot 3 |

250us

| 120KHz | Slot 0 (14symbols) | Slot 1 | Slot 2 | Slot 3 | Slot 4 | Slot 5 | Slot 6 | Slot 7 |

125us

# FIG. 3A

# FIG. 3B

# FIG. 3C

# FIG. 4

Resource grid

A carrier
(up to 3300 subcarriers, i. e., 275 RBs)

A BWP

1 RB = 12 subcarriers

1 RE

1 subcarrier

1 symbol

l = 0 · · · · ·

k = 0

# FIG. 5

# FIG. 6

# FIG. 7A

# FIG. 7B

EP 4 586 537 A1

# FIG. 7C

UE

gNB

S701c
RRC configuration
(CSI resource set, CSI report: Semi-persistent )

S702c
CSI reporting Activation
by MAC CE or DCI

S703c
RSs for CSI resource set

S704c
Measurement

S705c
CSI report

S706c
RSs for CSI resource set

Periodic

S707c
Measurement

S708c
CSI report

Periodic

S709c
CSI reporting Activation
by MAC CE or DCI

S710c
CSI reporting Activation
by MAC CE or DCI

S711c
RSs for CSI resource set

S712c
Measurement

S713c
CSI report

Periodic

S714c
RSs for CSI resource set

Periodic

S715c
Measurement

S716c
CSI report

# FIG. 8

START

Receive CSI reporting configuration including event information from a base station — S801

When a configured event is satisfied or occurs, transmit L1/L2 signaling indicating satisfaction or occurrence of the event — S802

Activate PUCCH/PUSCH resource configured for CSI reporting — S803

Report CSI using activated resource — S804

END

# FIG. 9A

| R | R | $E_5$ | $E_4$ | $E_3$ | $E_2$ | $E_1$ | $E_0$ | Oct 1 |
|---|---|---|---|---|---|---|---|---|

# FIG. 9B

| R | R | Event ID | Oct 1 |
|---|---|---|---|

# FIG. 9C

| R | R | Event ID | Oct 1 |
|---|---|---|---|
| (LTM) CSI report configuration ID | | | Oct 2 |

# FIG. 9D

| R | R | Event ID | | | | | | Oct 1 |
|---|---|---|---|---|---|---|---|---|
| R | R | $RC_5$ | $RC_4$ | $RC_3$ | $RC_2$ | $RC_1$ | $RC_0$ | Oct 2 |

# FIG. 9E

| R | R | $RC_5$ | $RC_4$ | $RC_3$ | $RC_2$ | $RC_1$ | $RC_0$ | Oct 1 |
|---|---|---|---|---|---|---|---|---|
| R | R | Event ID | | | | | | Oct 2 |

...

| R | R | Event ID | | | | | | Oct 5 |
|---|---|---|---|---|---|---|---|---|

# FIG. 9F

| R | R | CSI report configuration ID | Oct 1 |
|---|---|---|---|

# FIG. 10

UE      gNB

S1001
CSI resource/report configuration
(event trigger report type)

S1002
L1 measurement

S1003
Event satisfaction

S1004
CSI Reporting SR MAC CE
(including triggered event information)

S1005
Activate CSI reporting by DCI or MAC CE
(aperiodic or semi-persistent)

S1006
CSI Report

# FIG. 11

# FIG. 12

# FIG. 13

# FIG. 14

```
┌─────────┐
│  START  │
└─────────┘
```

Receive CSI(channel state information) reporting configuration information including event information, and CSI resource configuration information — S1401

Perform measurement on at least one of CSI-RS(channel state information-reference signal) and SSB(synchronization signal block) based on CSI resource configuration information — S1402

When at least one event according to the event information included in the CSI reporting configuration information is satisfied based on the measurement, transmit L1(layer 1) signaling or L2 (layer 2) signaling for CSI report — S1403

```
┌─────────┐
│   END   │
└─────────┘
```

# FIG. 15

START

Transmit CSI reporting configuration information including event information, and CSI resource configuration information for measurement of at least one of CSI-RS and SSB — S1501

When at least one event according to the event information included in the CSI reporting configuration information is satisfied based on the CSI resource configuration information for measurement, receive L1(layer 1) signaling or L2 (layer 2) signaling for CSI report — S1502

END

# FIG. 16

# FIG. 17

# FIG. 18

# FIG. 19

Europäisches
Patentamt

European
Patent Office

Office européen
des brevets

# EUROPEAN SEARCH REPORT

**Application Number**

EP 25 15 1128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/337031 A1 (QIAO XUEMEI [CN] ET AL) 19 October 2023 (2023-10-19) * paragraphs [0031], [0044] - [0045], [0055], [0067] - [0068] * | 1-15 | INV. H04L5/00 H04W24/10 |
| | ----- | | |
| X | US 2023/254086 A1 (HAO CHENXI [CN] ET AL) 10 August 2023 (2023-08-10) * paragraphs [0068] - [0069], [0115], [0135] * | 1,2,6-8, 12-14 | |
| | ----- | | |
| X,P | WO 2024/168519 A1 (APPLE INC [US]) 22 August 2024 (2024-08-22) * paragraphs [0003], [0069], [0071] - [0072] * | 1,2,6-8, 12-14 | |
| | ----- | | |

**TECHNICAL FIELDS SEARCHED (IPC)**

H04L
H04W

The present search report has been drawn up for all claims

| Place of search | Date of completion of the search | Examiner |
|---|---|---|
| The Hague | 27 May 2025 | Barrientos Lezcano |

EPO FORM 1503 03.82 (P04C01)

## ANNEX TO THE EUROPEAN SEARCH REPORT
## ON EUROPEAN PATENT APPLICATION NO.

EP 25 15 1128

This annex lists the patent family members relating to the patent documents cited in  the above-mentioned European search report.
The members are as contained in the European Patent Office EDP file on
The European Patent Office is in no way liable for these particulars which are merely given for the purpose of information.

27-05-2025

| Patent document cited in search report | Publication date | Patent family member(s) | | Publication date |
|---|---|---|---|---|
| US 2023337031  A1 | 19-10-2023 | CN | 114731532 A | 08-07-2022 |
| | | CN | 118338350 A | 12-07-2024 |
| | | EP |    4221303 A1 | 02-08-2023 |
| | | US | 2023337031 A1 | 19-10-2023 |
| | | WO | 2022061553 A1 | 31-03-2022 |
| US 2023254086  A1 | 10-08-2023 | CN | 116097599 A | 09-05-2023 |
| | | EP |    4197145 A1 | 21-06-2023 |
| | | US | 2023254086 A1 | 10-08-2023 |
| | | WO | 2022032630 A1 | 17-02-2022 |
| WO 2024168519  A1 | 22-08-2024 | NONE | | |

EPO FORM P0459

For more details about this annex : see Official Journal of the European Patent Office, No. 12/82

**EP 4 586 537 A1**

**Patent documents cited in the description**

- KR 1020240005604
- KR 1020240193744